# EUROPEAN PATENT APPLICATION

(11) **EP 4 851 657 A1**
(43) Date of publication of application: **09.12.2026**
(21) Application number: 26182971.7
(22) Date of filing: 03.06.2026
(51) Int. Cl.: G01S 3/38, H01Q 3/04, H01Q 3/14, H01Q 3/24, H01Q 15/08, H01Q 19/06, H01Q 21/20

(54) **A SYSTEM FOR TRACKING AN ELECTROMAGNETIC SOURCE**

(30) Priority: 04.06.2025 IL 32129625
(71) Applicant: Over-Sat Ltd., 4250574 Netanya (IL)
(72) Inventor: WIENSHTIEN, Lior, 4284200 Bat Hefer (IL); VOIN, Miron, 3299108 Haifa (IL); ALBAGLI, Joseph, 4334160 Raanana (IL)
(74) Representative: Klöckner, Christoph

(57) **Abstract**

A system for continuously tracking an electromagnetic source that emits or reflects electromagnetic radiation. The system comprises a spherical lens, such as a Luneburg lens, mounted on a base platform, and a first array of antenna elements mounted externally to the lens and conforming to the spherical contour thereof, so as to allow transmission and/or detection of electromagnetic radiation through the lens. The first array is rotatable with respect to the stationary lens about a radial axis of the lens. A processing circuitry is configured to: (i) controllably activate and deactivate at least one antenna element of the first array; and (ii) control the rotational movement of the first array and activate the desired antenna elements to continuously track the electromagnetic signal emitted from the electromagnetic source. In some embodiments, the first array is mounted on a rotatable element coupled to a driving mechanism housed in the base platform. The first array may comprise a single arc of antenna elements or additional rows to mitigate zenith key-hole challenges. The system enables efficient, cost-effective continuous electromagnetic tracking for applications including satellite communication, passive surveillance, and tracking of airborne, ground, marine, or space targets.

## Description

### TECHNOLOGICAL FIELD

The present disclosure is in the field of systems for tracking electromagnetic radiation.

### BACKGROUND ART

References considered to be relevant as background to the presently disclosed subject matter are listed below:
- US 2014/0139370
- US 10553947

Acknowledgement of the above references herein is not to be inferred as meaning that these are in any way relevant to the patentability of the presently disclosed subject matter.

### GENERAL DESCRIPTION

The present disclosure provides a system for allowing continuous tracking of an electromagnetic source that emits or reflects electromagnetic signal in the form of electromagnetic radiation. The solution provided by the present disclosure is an efficient and cost-effective solution that requires a single array of antenna elements that is rotatable externally to a spherical lens, such as a Lundberg lens, so as to transmit and receive electromagnetic signals by the antenna array through the lens. By controlling the rotational position of the array and controllable activating and deactivating the antenna elements of the array, the antenna beam of the system can be aligned with the electromagnetic signal of the electromagnetic source, and therefore an electromagnetic tracking of the electromagnetic source is obtained. The electromagnetic tracking can be part of unidirectional communication or bidirectional communication.

When the electromagnetic tracking is unidirectional, the system is passive and only tracks the trajectory of the electromagnetic source and its electromagnetic radiation, such as tracking of a missile or any other unknown electromagnetic emitter.

When the electromagnetic tracking is bidirectional, the system is active and communicates with the electromagnetic source by sending it its own electromagnetic signal carrying a certain data, such as when tracking a satellite or a communication unit carried by a vehicle.

The control of the rotational position of the array and the activation of the antenna elements is performed by a processing circuitry, e.g. a processor, a processing unit or a controller. The processing circuitry is configured to calculate the estimated position of the electromagnetic source and to cause the array to be positioned in the required rotational position and to activate the required antenna elements of the array to thereby align the electromagnetic antenna beam of the system with the electromagnetic source. The processing circuitry may further rely on measurements from positioning systems, such as Global Positioning System (GPS) and measurements from inertial measurement unit (IMU) to calculate the estimated position of the electromagnetic source with respect to the system.

Thus, the system of the present disclosure can be used for line-of-sight communication, for passive applications in which the system only receives electromagnetic signals, receiving electromagnetic signals from stars, detection of changes in reception due to missiles presence and more, electromagnetic tracking of ground, sea, air or space targets.

Therefore, an aspect of the present disclosure provides a system for continuous tracking electromagnetic signal emitted from an electromagnetic source. The system comprises a lens having a spherical symmetry mounted on a base or a based platform (the terms "base" and "base platform" are interchangeably used throughout the application). The base platform can be placed on a surface or coupled to another structure to be carried thereby. The base platform is used for mounting the lens and accommodating some of the elements of the system. The system further comprises a first array of antenna elements that is mounted externally to the lens and conforming with a spherical contour of said lens to allow transmission and/or detection of electromagnetic radiation through the lens. Namely, the first array extends along an arc of a sphere having about the same radius as the lens, only a bit longer as it is mounted externally to the lens. The first array of antenna is rotatable about a radial axis of said lens defined by a radius of the lens.

The system further comprises a processing circuitry that is configured for: (i) controllably activating and deactivating at least one antenna element of said first array; and (ii) controlling the rotational movement of the first array and activating the desired antenna elements to track the electromagnetic signal emitted from the electromagnetic source. Namely, the lens is maintained stationery and the first array is rotated and being modulated to allow the tracking of the electromagnetic source.

In some embodiments of the system, the first array is mounted on a rotatable element, that can be an integral part of the array or an element that is being coupled or attached to the first array of antenna elements. The rotatable element is rotatable about said radial axis. The controlling the rotational movement of the first array comprises controlling the rotational movement of the rotatable element about said radial axis, to thereby rotate the first array.

In some embodiments of the system, the rotatable element is either mounted on, at least partially accommodated in, or seats against a portion of said base platform.

In some embodiments of the system, the rotatable element is coupled to a driving mechanism configured for rotating it about said radial axis, wherein the driving mechanism is coupled to, mounted on, or housed in the based platform.

In some embodiments of the system, said first array extends along an arc in only one side of the radial axis. Namely, there are antenna elements only from one side of the rotation axis of the rotatable element.

In some embodiments of the system, said first array extends along an arc from both sides of the radial axis. Namely, there are antenna elements from both sides of the rotation axis of the rotatable element.

In some embodiments of the system, said first array extends along an arc that is less than half of the perimeter of the lens.

In some embodiments of the system, the processing circuitry is further configured for (iii) either receiving, calculating, or detecting electromagnetic source data indicative of the position of said electromagnetic source; wherein said controlling the rotational movement of the first array and activating the desired antenna elements is based on said electromagnetic source data.

In some embodiments, the system further comprises an inertial measurement unit (IMU) configured to sense the orientational state of the system with respect to the global (earth) coordinate frame or with respect to a coordinates reference frame and generate orientation data indicative of said sensed movement and transmit it to the processing circuitry. Wherein said controlling the rotational movement of the first array and activating the desired antenna elements further comprises controlling the first array of antenna, namely its rotational position and the activation of the required antenna elements, to compensate said movement to allow said tracking in response to the orientation data.

In some embodiments of the system, the first array is positioned in a volume confined between the base platform and the lens.

In some embodiments of the system, the first array maintains between the base platform and the lens during its rotation about the radial axis.

In some embodiments of the system, said first array consists of a single row of antenna elements, namely a single arc of antenna elements.

In some embodiments of the system, said first array comprises a first row of antenna elements extending along a first arc and one or more second rows of antenna elements extending along one or more second arcs, the one or more second arcs are orthogonal to the first arc. It is to be noted that the second arc may also form a non-right angle with the first arc.

In some embodiments of the system, the second arc extends from the center of the first arc. Namely, the second arc extends from about the middle point of the length of the first arc.

In some embodiments of the system, the second arc extends either (1) only to one side of the first arc or (2) to both sides of the first arc.

In some embodiments of the system, said first array comprises a first row of antenna elements extending along a first arc and one or more second rows of antenna elements extending along respective second arcs, the one or more second arcs are either parallel to or form an angle with the first arc. The one or more second rows of antenna elements allow to mitigate the zenith key-hole problem. In some embodiments of the system, the one or more second arcs are parallel to the first arc.

In some embodiments of the system, the array of antenna elements comprises additional one or more arcs of antenna elements that are added to the first arc such that they are practically extending the first arc by additional row or rows of antenna elements around the mechanical rotation axis, i.e. the radial axis, thus allowing the zenith key-hole mitigation.

In some embodiments of the system, each of the one or more second rows of antenna elements comprises a corresponding antenna element to each element of a selected number of antenna elements of the first row of antenna elements, thereby allowing the transfer of the tracking between the element of the first row to its corresponding element in the one or more second rows when the target, i.e. the electromagnetic source, is at the zenith. The number of antenna elements of the first row of antenna elements that require such corresponding elements may vary according to the requirement of the system. The number can be 1, 2, 3, 4, 5, or even 6 or more elements. In some embodiments of the system, the one or more second rows of antenna elements comprise less antenna elements than the first arc. For example, the second arc may comprise one or two antenna elements.

In some embodiments of the system, the first and one or more second rows of antenna elements are configured for data communication in the same frequency band. Therefore, the second row of antenna elements is used to overcome zenith passage challenges when the electromagnetic source is passing in the zenith and the tracking motion requires a 90° degrees rotation.

In some embodiments of the system, the first row of antenna elements is configured for data communication in a first frequency band and the one or more second rows of antenna elements are configured for data communication in a second frequency band. The electromagnetic source data further comprises data indicative of the operative frequency band of the electromagnetic source. The processing circuitry is configured for controlling the movement of the first array and activating the desired antenna elements to track the electromagnetic source with the first or one or more second rows of antenna elements according to the operative frequency band of the electromagnetic source.

In some embodiments of the system, wherein said controlling the rotational movement of the first array and activating the desired antenna elements is performed to steer a tracking beam of the system.

In some embodiments of the system, wherein the lens is a Luneburg lens.

In some embodiments of the system, wherein the electromagnetic source is selected from any one of: satellite (either LEO or GEO), vehicle (either land, airborne, space or marine vehicle), stars or other celestial bodies, a missile, e.g. hypersonic missile, or reflection of other electromagnetic sources.

In some embodiments, the system further comprises a second array of antenna elements that is mounted externally to the lens and conforming with a spherical contour of said lens to allow transmission and/or detection of electromagnetic radiation through the lens. Namely, the second array extends along a second array arc of a sphere different than the first array and having about the same radius as the lens, only a bit longer as it is mounted externally to the lens. The second array of antenna elements is rotatable about a second radial axis of said lens defined by a radius of the lens that is either the same or different than the rotational axis of the first array. Namely, the first and second array can either rotate together by a common rotatable element or can be rotated by two independent rotatable elements. The processing circuitry is further configured for controlling the rotational movement of the second array and activating the desired antenna elements to track the electromagnetic signal emitted from the electromagnetic source.

In some embodiments of the system, the second array is rotatable by a second rotatable element different than the rotatable element rotating the first array.

In some embodiments of the system, the second array is rotatable by the rotatable element rotating the first array.

In some embodiments of the system, the second array operates in a different frequency range than the first array.

In some embodiments of the system, the lens is stationary with respect to the base platform.

In some embodiments of the system, the first array of antenna elements is rotatable about an azimuthal axis. The azimuthal axis is defined by the radial axis of the lens about which the first array is rotatable. Thus, the rotation of the first array about the radial axis corresponds to an azimuthal rotation, allowing the first array to be positioned at different azimuthal positions relative to the lens. By controlling the azimuthal rotational position of the first array together with the activation and deactivation of the antenna elements, the processing circuitry is able to steer the electromagnetic beam of the system toward the electromagnetic source across different azimuthal directions.

In some embodiments of the system, a projection is disposed on an outer surface of the lens. The projection extends outwardly from the outer surface of the lens and is seated on an edge of a first portion of the base platform, thereby supporting the lens on the base platform. The projection may be a continuous or discontinuous element extending along the outer surface of the lens. The term 'projection' as used herein encompasses any structural element extending outwardly from the outer surface of the lens, including but not limited to flanges, rims, ridges, collars, bands, lips, and the like.

In some embodiments of the system, the projection extends along at least a portion of a circumference of the lens at or near an equator of the lens. The projection may extend continuously about the entire equator of the lens or along a portion thereof sufficient to stably support the lens on the base platform.

In some embodiments of the system, a gap is defined between portions of the lens and the first portion of the base platform. In such a configuration, the projection serves as the interface between the lens and the base platform, while the portions of the lens between the contact points of the projection and the first portion do not rest against or contact the first portion. This arrangement allows the lens to be supported on the base platform while maintaining clearance between the lens body and the first portion of the base platform.

In some embodiments of the system, the first portion is cylindrical.

In some embodiments of the system, the first portion of the base platform is a portion of the base platform proximal to the lens. Namely, the first portion is the portion of the base platform that is closest to the lens and within which or above which the first array of antenna elements operates. In some embodiments of the system, the first portion of the base platform is at least partially transparent to electromagnetic radiation in a frequency range detectable by the first array of antenna elements. For example, the first portion may be formed of a material that is transparent to radio frequency (RF) radiation or to millimeter wave radiation, depending on the operative frequency band of the system. The transparency of the first portion allows electromagnetic radiation to propagate between the lens and the first array of antenna elements through the first portion without substantial attenuation.

In some embodiments of the system, the first array of antenna elements is confined in a volume defined between the first portion of the base platform and the lens. In such a configuration, electromagnetic radiation transmitted and/or received by the first array may pass through the first portion of the base platform to and from the lens.

In some embodiments of the system, the projection is integrally formed with the lens, for example by shaping the lens material itself to form the projection during the manufacturing of the lens. In some other embodiments of the system, the projection is a separate element disposed on the outer surface of the lens, for example a ring or band of material that is applied, bonded, adhered, or otherwise coupled to the outer surface of the lens.

In some embodiments of the system, the entire base platform is at least partially transparent to electromagnetic radiation in a frequency range detectable by the first array of antenna elements. In such a configuration, the base platform may be formed of a single material or a combination of materials that are transparent to electromagnetic radiation in the operative frequency range of the system. In such embodiments, the first portion of the base platform is a portion of the base platform that is defined by its proximity to the lens rather than by a difference in material properties relative to other portions of the base platform.

In some embodiments of the system, the first array of antenna elements extends along an arc of at most a quarter of the circumference of the lens. Namely, the arc of the first array subtends an angle of at most 90 degrees at the center of the lens.

In some embodiments of the system, the arc length of the first array is configured such that electromagnetic radiation transmitted or received through one end of the first array is not obstructed by another end of the first array. When the array extends beyond a certain angular extent along the circumference of the lens, portions of the array at one end may enter the electromagnetic path of portions at the other end, thereby attenuating or blocking the electromagnetic radiation propagating through the lens to or from those portions. By limiting the angular extent of the first array to at most a quarter of the circumference of the lens, namely at most 90 degrees at the center of the lens, a clear electromagnetic path is maintained between each antenna element of the first array and the lens, ensuring that no portion of the array obstructs the transmission or reception of another portion.

As used throughout the application, the term 'about' when used in connection with a value, quantity, dimension, or proportion, encompasses the stated value, quantity, dimension, or proportion and values reasonably close thereto, including deviations of up to ±20% of the stated value, quantity, dimension, or proportion, accounting for measurement tolerances, manufacturing variations, and rounding.

### EMBODIMENTS

The following numbered embodiments provide explicit written description support for combinations of features of the present disclosure. Any feature of any embodiment may be combined with any feature of any other embodiment, unless technically impossible or contradictory:
**1.** A system for continuous tracking electromagnetic signal emitted from an electromagnetic source, comprising:
   a lens having a spherical symmetry mounted on a base platform;
   a first array of antenna elements is mounted externally to the lens and conforming with a spherical contour of said lens to allow transmission and/or detection of electromagnetic radiation through the lens;
   wherein the first array of antenna elements is rotatable with respect to the lens about a radial axis of said lens defined by a radius of the lens, while the lens is maintained stationary;
   a processing circuitry configured for:
      (i) controllably activating and deactivating at least one antenna element of said first array; and
      (ii) controlling the rotational movement of the first array and activating the desired antenna elements to track the electromagnetic signal emitted from the electromagnetic source.
**2.** The system of embodiment 1, wherein the first array is mounted on a rotatable element rotatable about said radial axis; wherein said controlling the rotational movement of the first array comprises controlling the rotational movement of the rotatable element about said radial axis, to thereby rotate the first array.
**3.** The system of embodiment 2, wherein the rotatable element is mounted on, at least partially accommodated in, or seats against a portion of said base platform.
**4.** The system of embodiment 2 or 3, wherein the rotatable element is coupled to a driving mechanism configured for rotating it about said radial axis, wherein the driving mechanism is coupled to or housed in the based platform.
**5.** The system of any one of embodiments 1-4, wherein said first array extends along an arc in only one side of the radial axis.
**6.** The system of any one of embodiments 1-4, wherein said first array extends along an arc from both sides of the radial axis.
**7.** The system of any one of embodiments 1-6, wherein said first array extends along an arc that is less than half of the perimeter of the lens.
**8.** The system of any one of embodiments 1-7, wherein the processing circuitry is further configured for (iii) receiving electromagnetic source data indicative of the position of said electromagnetic source; wherein said controlling the rotational movement of the first array and activating the desired antenna elements is based on said electromagnetic source data.
**9.** The system of any one of embodiments 1-8, comprising an inertial measurement unit (IMU) configured to sense the orientational state of the system with respect and generate orientation data indicative of said sensed movement and transmit it to the processing circuitry; wherein (ii) further comprises controlling the first array of antenna to compensate said movement to allow said tracking in response to the orientation data.
**10.** The system of any one of embodiments 1-9, wherein the first array is positioned in a volume confined between the base platform and the lens.
**11.** The system of embodiment 10, wherein the first array maintains between the base platform and the lens during its rotation about the radial axis.
**12.** The system of any one of embodiments 1-11, wherein said first array consists of a single row of antenna elements.
**13.** The system of any one of embodiments 1-12, wherein said first array comprises a first row of antenna elements extending along a first arc and one or more second rows of antenna elements extending along one or more second arcs, the one or more second arcs are orthogonal to the first arc.
**14.** The system of embodiment 13, wherein the second arc extends from a center of the first arc.
**15.** The system of embodiment 13 or 14, wherein the second arc extends either (1) only to one side of the first arc or (2) to both sides of the first arc.
**16.** The system of any one of embodiments 1-12, wherein said first array comprises a first row of antenna elements extending along a first arc and one or more second rows of antenna elements extending along respective second arcs, the one or more second arcs are either parallel to or form an angle with the first arc.
**17.** The system of embodiment 16, wherein each of the one or more second rows of antenna elements comprise a corresponding antenna element to each element of a selected number of antenna elements of the first row of antenna elements.
**18.** The system of any one of embodiments 13-17, wherein the one or more second rows of antenna elements comprise less antenna elements than the first arc.
**19.** The system of any one of embodiments 13-18, wherein the first and one or more second rows of antenna elements are configured for data communication in the same frequency band.
**20.** The system of any one of embodiments 13-19, wherein the first row of antenna elements is configured for data communication in a first frequency band and the one or more second rows of antenna elements are configured for data communication in a second frequency band;
   wherein the electromagnetic source data further comprises data indicative of the operative frequency band of the electromagnetic source;
   wherein the processing circuitry is configured for controlling the movement of the first array and activating the desired antenna elements to track the electromagnetic source with the first or one or more second rows of antenna elements according to the operative frequency band of the electromagnetic source.
**21.** The system of any one of embodiments 1-20, wherein (ii) is performed to steer a tracking beam of the system.
**22.** The system of any one of embodiments 1-21, wherein the lens is a Luneburg lens.
**23.** The system of any one of embodiments 1-22, wherein the electromagnetic source is selected from any one of: satellite, vehicle, celestial bodies, missile or reflections of other sources.
**24.** The system of any one of embodiments 1-23, comprising a second array of antenna elements that is mounted externally to the lens and conforming with a spherical contour of said lens to allow transmission and/or detection of electromagnetic radiation through the lens, the second array of antenna elements is rotatable about a second radial axis of said lens defined by a radius of the lens that is either the same or different than the rotational axis of the first array; wherein the processing circuitry is further configured for controlling the rotational movement of the second array and activating the desired antenna elements to track the electromagnetic signal emitted from the electromagnetic source.
**25.** The system of any one of embodiments 1-24, wherein a projection is disposed on an outer surface of the lens, the projection extending outwardly from the outer surface of the lens, the projection being seated on an edge of a first portion of the base platform, thereby supporting the lens on the base platform.
**26.** The system of embodiment 25, wherein the projection extends along at least a portion of a circumference of the lens at or near an equator of the lens.
**27.** The system of embodiment 25 or 26, wherein the first portion of the base platform is at least partially transparent to electromagnetic radiation in a frequency range detectable by the first array of antenna elements.
28. The system of any one of embodiments 25-27, wherein the projection is either integrally formed with the lens or is a separate element disposed on the outer surface of the lens.
29. The system of any one of embodiments 25-28, wherein the base platform is at least partially transparent to electromagnetic radiation in a frequency range detectable by the first array of antenna elements.
30. The system of any one of embodiments 1-29, wherein the first array of antenna elements extends along an arc of at most a quarter of the circumference of the lens.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figs. 1A-1D** are schematic illustrations of different views of a non-limiting example of an embodiment of the tracking system according to an aspect of the present disclosure. **Fig. 1A** is a top perspective view; **Fig. 1B** is a longitudinal cross-sectional view; **Fig. 1C** is top perspective view without the lens; and **Fig. 1D** is an exploded view.
**Figs. 2A-2B** are schematic illustrations of different views of a non-limiting example of an embodiment of the tracking system according to an aspect of the present disclosure. **Fig. 2A** is side view with the base being transparent; and **Fig. 2B** is a longitudinal cross-sectional view.
**Fig. 3** is a perspective view a non-limiting example of an embodiment of the tracking system according to an aspect of the present disclosure wherein the base is transparent.
**Fig. 4** is a perspective view a non-limiting example of an embodiment of the tracking system according to an aspect of the present disclosure wherein the base is transparent.

### DETAILED DESCRIPTION

The following figures are provided to exemplify embodiments and realization of the invention of the present disclosure.

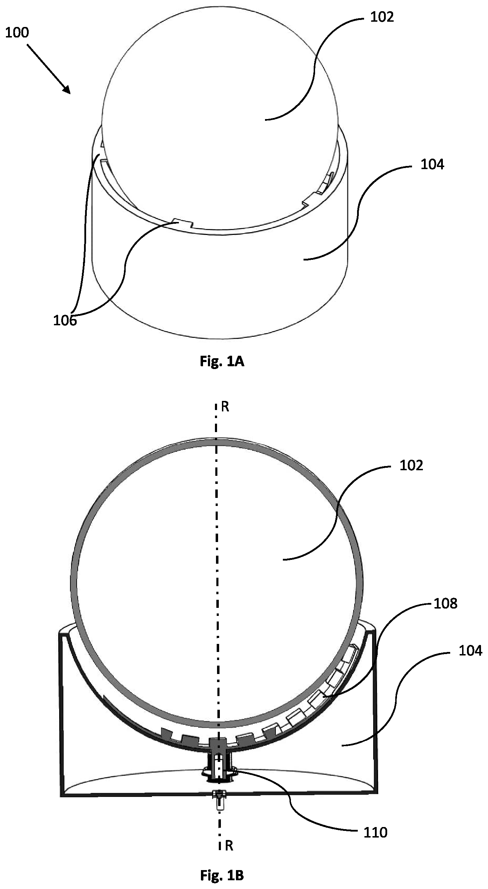

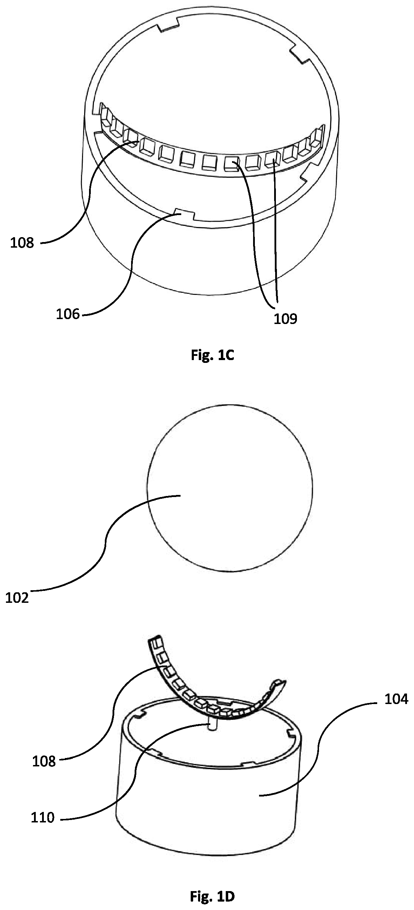

Reference is made to **Figs. 1A-1D****,** which show different views of a non-limiting example of an embodiment of the system according to an aspect of the present disclosure. The system **100** comprises a spherical lens **102,** in this example a Luneburg lens, that is mounted on or coupled to a base **104** via coupling elements **106.** An array of antenna elements **108** is mounted externally to the lens **102** such that it is positioned in the volume confined between the base **104** and the lens 102. The array **108** has an arc shape conforming with the spherical shape of the lens **102** and it extends to a length that is less of half of the perimeter of the lens **102.** The array **108** is rotatable about a rotational axis **R,** which is a radial axis of the lens **102.** The rotational axis **R** defines an azimuthal axis such that the rotation of the array **108** about the rotational axis **R** corresponds to an azimuthal rotation, allowing the array **108** to be positioned at different azimuthal positions relative to the lens **102.** The lens **102** is maintained stationary with respect to the base **104** while the array **108** is rotating around it. The array **108** is mounted on a rotatable element **110** that is driven to be rotated by a driving mechanism (not shown), wherein the rotation of the rotatable element **110** results in a rotation of the array **108.** The driving mechanism is either housed in the base **104** or external to the base **104** and either coupled or being couplable to the rotatable element **110.** It is to be noted that some elements that are integrating with the system may be housed externally to the base **104,** e.g. in a bag or a container, or in an extension of the base **104.** For example, the driving mechanism, the processing circuitry, the block up converter (BUC), and the low noise block converter (LNB) can all be housed either in the base or its extension or externally thereto.

The processing circuitry (not shown) is configured to control (i) the rotational position of the array **108** by controllably rotating the rotatable element **110** and (ii) the activation and deactivation of the antenna elements **109** of the array **108** to continuously track an electromagnetic source that emits or reflects electromagnetic signal, namely electromagnetic radiation.

The electromagnetic source may be a known electromagnetic emitter and the system **100** may receive data of its position, either in a continuous manner, e.g. in the case of a Low Earth Orbit (LEO) satellite or in a non-continuous manner, such as in the form of a database stored in a memory, in the case of a geosynchronous equatorial orbit (GEO) satellite.

In some other embodiments, the electromagnetic source may be an unknown electromagnetic emitter, such as a missile or an unknown vehicle, and the system may detect it and then perform a continuous tracking of it by estimating its trajectory and controlling the rotational position of the array **108** and the required antenna elements **109** to be activated.

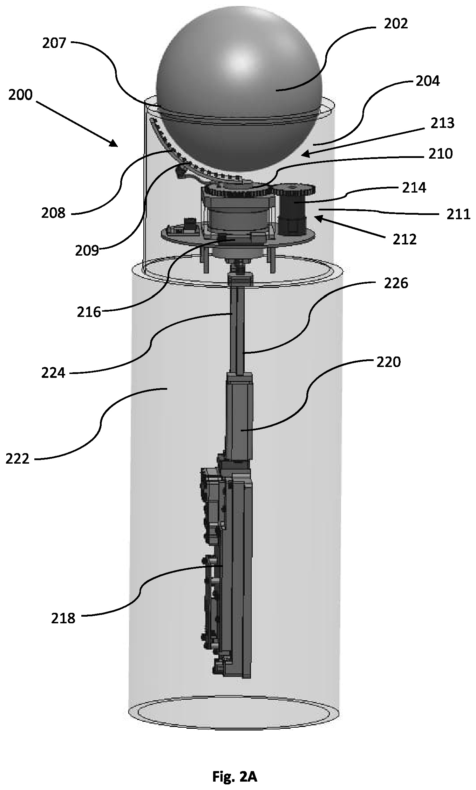

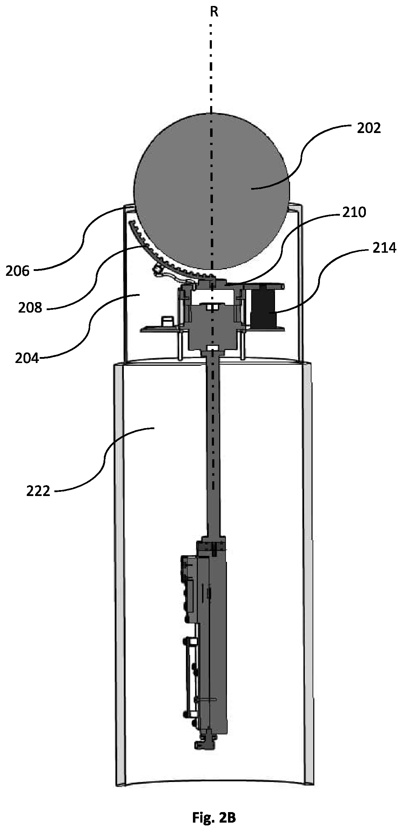

Reference is now being made to **Figs. 2A-2B****,** which show different views of a non-limiting example of an embodiment of the system according to an aspect of the present disclosure. In this example, the system **200** comprises a spherical lens **202,** i.e. a Luneburg lens, that is mounted on or coupled to a base **204** via coupling elements or a seat **206.**

An array of antenna elements **208** is mounted externally to the lens **202** such that it is positioned in the volume confined between the base **204** and the lens **202,** the array **208** comprises a plurality of antenna elements **209.** The array **208** has an arc shape conforming with the spherical shape of the lens **202** and it extends to a length that is about a quarter of the perimeter of the lens **202.** The array **208** is rotatable about a rotational axis **R,** which is a radial axis of the lens **202.** The rotational axis **R** defines an azimuthal axis such that the rotation of the array **208** about the rotational axis **R** corresponds to an azimuthal rotation, allowing the array **208** to be positioned at different azimuthal positions relative to the lens **202.** The rotation of the array **208** is driven by a rotatable element **210** on which it is mounted. The rotatable element **210** is part of a driving mechanism **212** that comprises a rotating motor **214** and a rotatable gear coupled to the rotating motor **214** to be driven thereby. The lens **202** is maintained stationary with respect to the base **204** while the array **208** is rotating around it.

The lens **202** has a projection **207** disposed on its outer surface at or near the equator of the lens **202.** The projection **207** extends outwardly from the outer surface of the lens **202** and is seated on an edge of a first portion of the base **204,** forming the seat **206,** thereby supporting the lens **202** on the base **204.** A first portion **211** of the base **204** is a portion of the base **204** proximal to the lens **202.** A gap is defined between portions of the lens **202** and the first portion of the base **204,** such that the lens **202** is supported on the base **204** via the projection **207** while portions of the lens **202** below the equator do not contact the first portion **211.** The first portion **211** of the base **204** is at least partially transparent to electromagnetic radiation in a frequency range detectable by the array **208.** The array **208** is confined in a volume **213** defined between the first portion **211** of the base **204** and the lens **202,** such that electromagnetic radiation transmitted and/or received by the array **208** may pass through the first portion to and from the lens **202.** A second portion **222** of the base **204,** which is the portion of the base **204** distal to the lens **202,** may be non-transparent or also at least partially transparent to electromagnetic radiation in a frequency range detectable by the array **208.**

The processing circuitry **216** of the system **200** is configured to control the driving mechanism **212** and the activation of the antennal elements **209** to continuously align the electromagnetic beam of the system with the electromagnetic source, thereby tracking it.

The system **200** further comprises an inertial measurement unit (IMU) for dynamic stabilization of the electromagnetic antenna beam. The combination of the lens with the array of electronically switchable antenna beams and the degree of freedom of the rotational movement by the rotatable element **210** together with the IMU allows implementation of mathematical algorithm for dynamic stabilization of the electromagnetic antenna beam pointing continuously to the electromagnetic source while the whole system is mounted on moving (in Roll, Pitch and Yaw) platform, like a ship, an airborne or a ground vehicle. Therefore, the processing circuitry **216** considers the IMU measurements, the estimated location of the electromagnetic source and its trajectory and the estimated true position of the system **200** (e.g. through GPS data or other solutions) in order to steer the electromagnetic beam of the array **208** towards the electromagnetic source, by activating the required antenna elements **209** and positioning the array **208** at the required rotational position.

The processing circuitry **216** and the driving mechanism **212** are housed within the base **204,** namely they are positioned in the volume confined by the base **204.**

The system **200** may further include a BUC **218** and a LNB **220** that are housed in the second portion **222.** It is to be noted that at least eh LNB **220** may be accommodated in the base **204.**

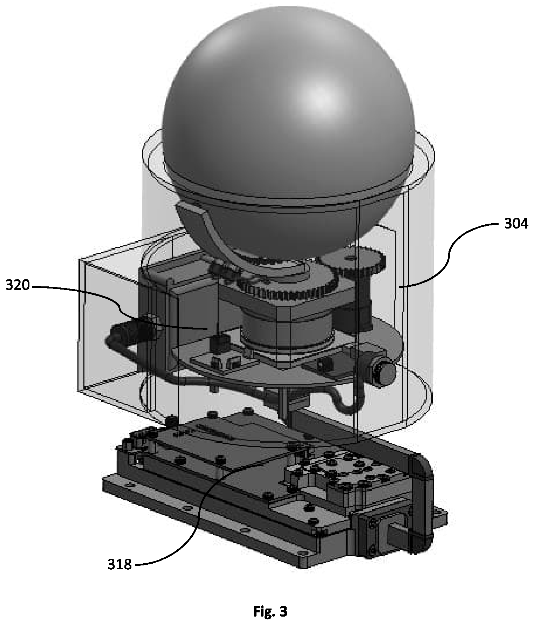

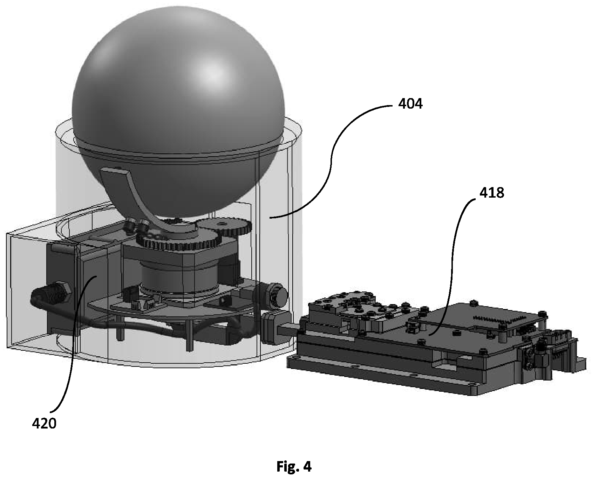

The BUC **218** and the LNB **220** are coupled to the array **208** through waveguides **224** and **226** that are configured to guide the electromagnetic waves to and from the array **208,** respectively. **Fig. 3** and **Fig. 4** show different embodiments of the system of the present disclosure in which the BUC **318/418** is positioned outside the base **304/404** and the LNB **320/420** is accommodated within the base **304/404.** In Fig. **3** the BUC **318** is below the base **304** and in **Fig. 4** the BUC **418** is positioned horizontally to the base **404.**

## Claims

1. A system for continuous tracking electromagnetic signal emitted from an electromagnetic source, comprising:
a lens having a spherical symmetry mounted on a base platform;
a first array of antenna elements is mounted externally to the lens and conforming with a spherical contour of said lens to allow transmission and/or detection of electromagnetic radiation through the lens;
wherein the first array of antenna elements is rotatable with respect to the lens about a radial axis of said lens defined by a radius of the lens;
a processing circuitry configured for:
(i) controllably activating and deactivating at least one antenna element of said first array; and
(ii) controlling the rotational movement of the first array and activating the desired antenna elements to track the electromagnetic signal emitted from the electromagnetic source.

2. The system of claim 1, wherein the first array is mounted on a rotatable element rotatable about said radial axis; wherein said controlling the rotational movement of the first array comprises controlling the rotational movement of the rotatable element about said radial axis, to thereby rotate the first array.

3. The system of claim 2, wherein the rotatable element is mounted on, at least partially accommodated in, or seats against a portion of said base platform.

4. The system of claim 2 or 3, wherein the rotatable element is coupled to a driving mechanism configured for rotating it about said radial axis, wherein the driving mechanism is coupled to or housed in the based platform.

5. The system of any one of claims 1-4, wherein said first array extends along an arc in only one side of the radial axis.

6. The system of any one of claims 1-4, wherein said first array extends along an arc from both sides of the radial axis.

7. The system of any one of claims 1-6, wherein the processing circuitry is further configured for (iii) receiving electromagnetic source data indicative of the position of said electromagnetic source; wherein said controlling the rotational movement of the first array and activating the desired antenna elements is based on said electromagnetic source data.

8. The system of any one of claims 1-7, wherein the first array is positioned in a volume confined between the base platform and the lens;
wherein the first array maintains between the base platform and the lens during its rotation about the radial axis.

9. aThe system of any one of claims 1-8, wherein said first array consists of a single row of antenna elements.

10. The system of any one of claims 1-8, wherein said first array comprises a first row of antenna elements extending along a first arc and one or more second rows of antenna elements extending along one or more second arcs, the one or more second arcs are either (i) orthogonal to the first arc, (ii) parallel to or (iii) form an angle with the first arc;
wherein the second arc extends from a center of the first arc;
wherein the second arc extends either (1) only to one side of the first arc or (2) to both sides of the first arc.

11. The system of any one of claims 1-10, wherein the lens is a Luneburg lens.

12. The system of any one of claims 1-11, wherein a projection is disposed on an outer surface of the lens, the projection extending outwardly from the outer surface of the lens, the projection being seated on an edge of a first portion of the base platform, thereby supporting the lens on the base platform.

13. The system of claim 12, wherein the first portion of the base platform is at least partially transparent to electromagnetic radiation in a frequency range detectable by the first array of antenna elements.

14. The system of claim 12 or 13, wherein the projection is either integrally formed with the lens or is a separate element disposed on the outer surface of the lens;
wherein the projection extends along at least a portion of a circumference of the lens at or near an equator of the lens..

15. The system of any one of claims 1-14, wherein the first array of antenna elements extends along an arc of at most a quarter of the circumference of the lens.
